Europäisches Patentamt

**(19)** European Patent Office

Office européen des brevets

**(11)** Publication number: **0 142 939**
**A1**

**(12)** # EUROPEAN PATENT APPLICATION

**(21)** Application number: **84307110.1**

**(22)** Date of filing: **17.10.84**

**(51)** Int. Cl.⁴: **B 63 B 9/00**
**B 63 H 23/32**

**(30)** Priority: **21.10.83 CA 439491**

**(43)** Date of publication of application:
**29.05.85 Bulletin 85/22**

**(84)** Designated Contracting States:
**DE FR GB NL SE**

**(71)** Applicant: **BURRARD YARROWS CORPORATION**
**109 East Esplanade**
**North Vancouver British Columbia V7L 1A1(CA)**

**(72)** Inventor: **Whyte, Norman D.**
**765 East 18th Street**
**North Vancouver British Columbia V7L 2Y7(CA)**

**(74)** Representative: **Purvis, William Michael Cameron et al,**
**D. Young & Co. 10 Staple Inn**
**London WC1V 7RD(GB)**

**(54)** Tailshaft inspection method and assembly.

**(57)** An inspection method and apparatus for inspecting the tailshaft (11) of a vessel in situ. Access to the tailshaft (11) is provided by means of access ports (40, 41) in a shaft boss (13) and access ports (40, 41) in a stern tube (12), which access ports can be closed by sealing plugs, and an optical viewing probe is inserted through the access ports (40, 33: 41, 34) to view the tailshaft (11).

*FIGURE 1*

1

## TAILSHAFT INSPECTION METHOD AND ASSEMBLY

The invention relates to a tailshaft inspection method and apparatus and, more particularly, to a tailshaft inspection method and apparatus utilized with the tailshaft assembly of a vessel in situ.

Tailshafts used on seagoing vessels require bearing support and lubrication. Seawater lubricated stern tube bearings have been satisfactorily utilized but the use of seawater causes corrosion. Underwriters, therefore, have required that tailshafts utilizing seawater lubrication must be fitted with a bronze liner substantially to reduce or remove the corrosive effects while using seawater for lubrication.

Bronze liners, however, are expensive and, recently, fibre glass liners have been utilized in their place between bearings. The use of fibre glass serves the same purpose as a bronze liner in protecting the tailshaft from corrosion. However, fibre glass can be easily damaged during the tedious assembly of the tailshaft to the stern tube and, therefore, although underwriters allow fibre glass rather than bronze liners, they require that such fibre glass coated tailshafts be visually inspected for damage every two years to ensure no damage occurred during assembly rather than the usual five year period required for bronze coated tailshafts.

To remove tail shafts for the required inspection requires dry docking. Dry docking is expensive. This is particularly so for ships built for arctic operations where the dry docking must be carried out under hostile environmental and operating conditions.

According to one aspect of the invention, there is provided a tailshaft inspection method characterised by the steps of providing an access to the tailshaft, inserting an optical probe through the access and viewing the tailshaft through the optical probe.

According to a further aspect of the invention, there is provided a tailshaft inspection assembly comprising a tailshaft journalled in bearings with a stern tube surrounding the tailshaft characterised in that a first access port in the stern tube is located between the bearings.

The invention is diagrammatically illustrated by way of example with reference to the accompanying drawings in which:

Figure 1 is a side view of a tailshaft inspection assembly according to said further aspect of the invention in assembled condition;

Figure 2 is an enlarged view taken on line II in Figure 1;

Figures 3A and 3B are views of a screw plug to be inserted in a stern tube and partially depicted in Figure 2;

Figures 4A and 4B are views of a screw plug to be inserted in a shaft boss of Figure 2;

Figure 5 is a view of an assembled optical probe inspection assembly; and

Figures 6A, 6B and 6C are partial views of the optical probe inspection assembly of Figure 5.

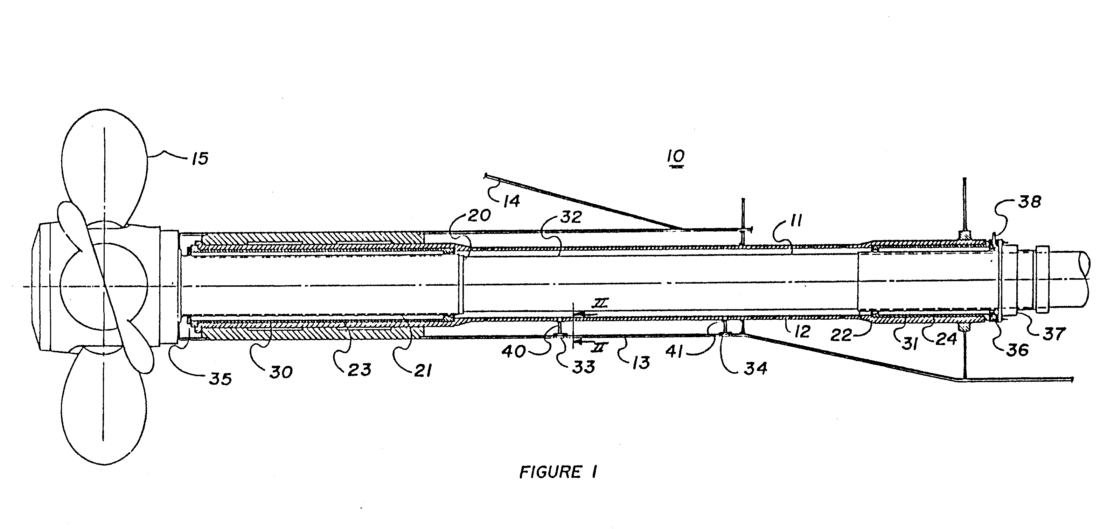

Referring to the drawings, a tailshaft assembly is shown generally at 10 in Figure 1. It comprises a tailshaft 11 surrounded by a stern tube 12 which, in turn, is surrounded itself by and supported from a shaft boss 13. The shaft boss 13 extends from and is connected to the hull 14 of a vessel (not shown). A propeller 15 is connected to the aft end of the tailshaft 11.

An aft stepped area 20 is provided on the tailshaft 11. A first bronze liner 21 surrounds the aft stepped area 20 and a second bronze liner 22 surrounds the forward end of the tailshaft 11. First and second rubber stern tube bearings 23, 24 surround the first and second bronze liners 21, 22, respectively.

First and second bronze backing rings 30, 31 surround the first and second rubber stern tube bearings 23, 24, respectively. The rubber stern tube bearings 23, 24 are mounted in oversize portions of the stern tube 12. A fibre glass coating 32 is applied to the tailshaft 11 between the first and second bronze liners 21, 22.

Aft and forward bearing retainer plates 35, 36, respectively, are connected to the first and second bronze backing rings 30, 31 and retain the stern tube bearings 23, 24 in position. A stern tube seal 37 seals the tailshaft 11 and water is pumped by a conduit 38 through the forward retainer plate 36 into the recess. The water travels the length of the tailshaft 11 in the recess and exits from the aft end of the aft stern tube bearing 23.

Aft and forward inspection ports 33, 34, respectively, are provided in the shaft boss 13 and, coaxial therewith, supplementary aft and forward inspection ports 40, 41 are provided in the stern tube 12.

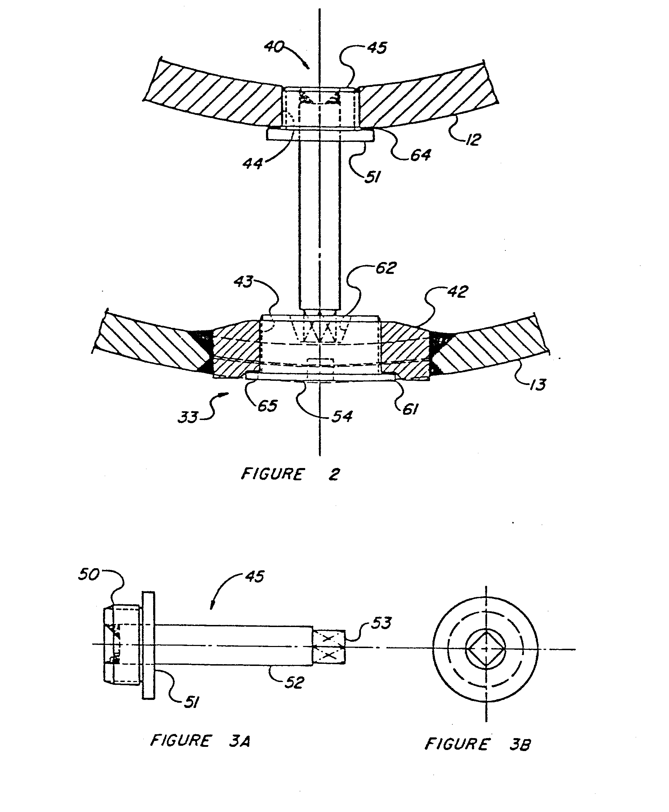

Referring to Figure 2, the aft inspection ports 33, 40 are shown in greater detail. A diameter is drilled through the shaft boss 13 and a similar but smaller diameter is drilled through the stern tube 12. A steel insert 42 is welded into the diameter in the shaft boss 13 and threads 43 are machined in the insert 42. Threads 44 are also machined in the diameter in the stern tube 12. A screw plug 45 is threaded into the diameter in the stern tube 12.

The screw plug 45 is shown more clearly in Figures 3A and 3B. The screw plug 45 is made from stainless steel or bronze and comprises a head portion 50, a flat 51, a tail 52 and an end 53. As clearly shown in Figure 3B, the end 53 is squared.

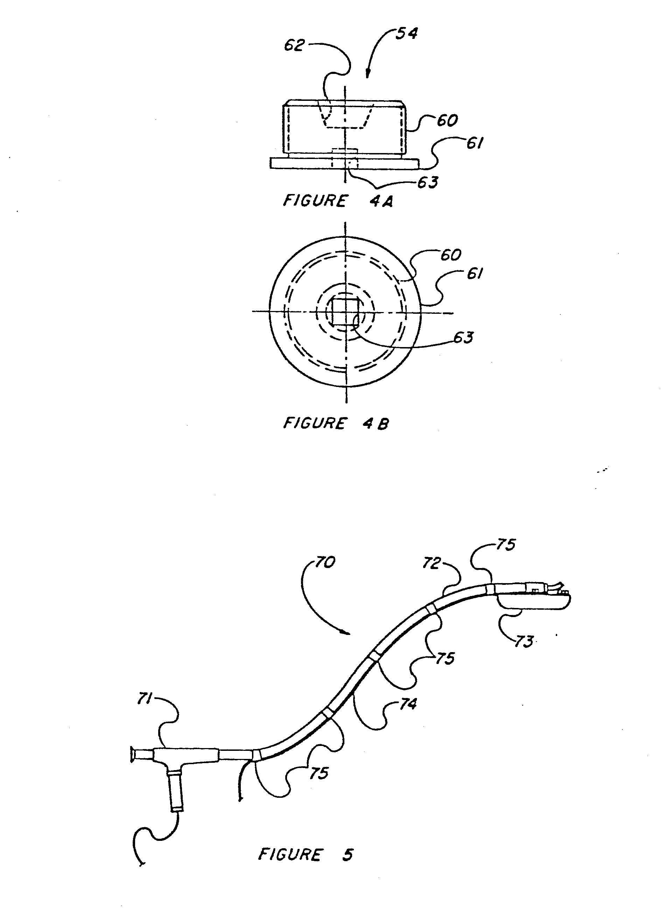

A second screw plug 54 is threadedly engaged in the diameter in the insert 42 of the shaft boss 13. The second screw plug 54 is shown more clearly in Figures 4A and 4B.

The second screw plug 54 is also made from stainless steel or bronze and includes a head 60 and a flat 61. The head 60 includes a rounded recess 62 into which fits the squared off end 53 of the screw plug 45. The flat 61 is provided with a square recess 63.

Neoprene gaskets 64, 65 are positioned between the stern tube 12 and the screw plug 45 and the screw plug 54 and the steel insert 42, respectively.

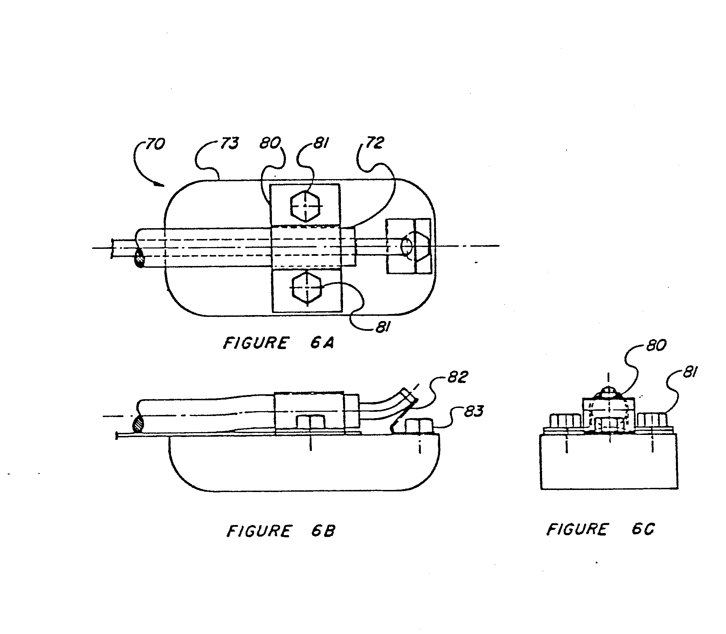

Referring to Figure 5, an optical probe inspection assembly is depicted generally at 70. It comprises a viewer 71, a flexible fibre optic probe 72 and a steel block 73. A wire trace 74 is attached to the probe 72 by tape 75 and prevents the probe 72 from snaking. The steel block 73, as best seen in Figures 6A and 6B, has rounded corners and a rounded bottom. A sheet steel clamp 80 holds the fibre optic probe 72 and capscrews 81 are inserted through the clamp 80 into the steel block 73. a second piece of sheet steel 82 is attached to the steel block 73 by capscrews 83. It is used to direct the optical probe 72 upwardly better to view the tailshaft 11. The viewer 71 and the optical probe 72 are of the kind used generally for fibre optic purposes. A probe manufactured by American Optical and known as the Fiberscope (Trade Mark) has been found quite satisfactory.

In operation, a vessel (not shown) to be inspected is ordinarily initially under construction and is out of water. The first and second bronze liners 21, 22 are attached to the tailshaft 11 and the fibre glass coating 32 is applied to the tailshaft 11 between the bronze liners 21, 22. The tailshaft 11 is then inserted into the stern tube 12 from the aft end of the vessel and the aft and forward bearing retaining plates 35, 36 and the stern tube seal 37 are assembled into the tailshaft assembly 10.

After installation of the tailshaft 11, the steel block 73 of the optical probe inspection assembly 70 is inserted through the forward inspection port 34 in the shaft boss 13 and the forward inspection port 41 in the stern tube 12. The steel block 73 is inserted through, first, the diameter in the shaft boss 13 (Figure 2) and, subsequently, the diameter in the stern tube 12. The steel block 73 will then rest upon the inner diameter of the stern tube 12 and may be moved forwardly or rearwardly within the stern tube 12 to inspect the fibre glass coating on the tailshaft 11. After inspection of the forward portion of the tailshaft 11, the probe assembly 70 is removed from the two forward inspection ports 34, 41 and is reinserted through the aft inspection ports 33, 40. A similar inspection then is made of the aft portion of the tailshaft 11.

It will be realized that with the viewing apparatus located in the bottom of the stern tube 12, only a limited portion of the outside diameter of the tailshaft 11 can be inspected. Accordingly, after inspection of the portion being viewed is completed, the tailshaft 11 is rotated such that a new portion of the outside diameter can be inspected. Thus, the entire outside surface of the fibre glass coating may be inspected to ensure no damage has been caused during installation or that, subsequently, no corrosion damage to the tailshaft 11 has taken place.

Following the inspection after initial assembly of the tailshaft 11 in the stern tube 12, the screw plug 45 is installed by threading it into its receiving diameter in the stern tube 12 and tightening. The screw plug 45 forms a tight seal between the flat 51, the neoprene gasket 64 and the stern tube 12. The screw plug 54 provides a similar seal between the flat 61, the neoprene gasket 65 and the steel insert 42. The screw plug 54 provides a retaining force on the screw plug 45 by providing a bearing force between the end 53 and rounded recess 62. Thus, the screw plug 45 is retained in its tightened position which enhances seal integrity.

When subsequent inspections are to be made, the vessel is dry docked, the screw plugs 45, 54 are removed and the inspection follows the procedure outlined above relative to the initial tailshaft inspection.

Many modifications may be made to the apparatus disclosed. One or a series of inspection ports may be provided depending on the length of the tailshaft 11. There may be no shaft boss 13 provided and, therefore, only an inspection port or ports in the stern tube 12 will be required. Access to the tailshaft 11 may be provided from within the vessel rather than from the outside as described and, when viewing the tailshaft 11, a camera or video recorder may be attached to the viewer and photographs can be taken for subsequent analysis os suspect areas in the fibre glass coating or for group viewing. The invention may also, of course, be used for vessels in freshwater as well as seawater operating conditions.

6 · **0142939**

## CLAIMS

1. A tailshaft inspection method characterised by the steps of providing an access to the tailshaft, inserting an optical probe through the access and viewing the tailshaft through the optical probe.

2. A tailshaft inspection method according to claim 1, wherein said access is at least partially provided in a stern tube surrounding said tailshaft.

3. A tailshaft inspection method according to claim 2, wherein said access is also at least partially provided in a shaft boss surrounding said stern tube.

4. A tailshaft inspection method according to claim 3, wherein said tailshaft is journalled by bearings adjacent each end and said tailshaft is viewed through said optical probe in the area between said bearings.

5. A tailshaft inspection method according to claim 4, wherein said access is provided by at least one inspection port in said stern tube and at least one inspection port in said shaft boss.

6. A tailshaft inspection assembly (10) comprising a tailshaft (11) journalled in bearings (23, 24) with a stern tube (12) surrounding the tailshaft (11) characterised in that a first access port (40) in the stern tube (12) is located between the bearings (23, 24).

7. A tailshaft inspection assembly according to claim 6, further comprising a shaft boss (13) substantially surrounding the stern tube (12) and a first access port (33) in the shaft boss (13) located adjacent the first access port (40) in the stern tube (12).

8. A tailshaft inspection assembly according to claim 7, and further comprising a second access port (41) in the stern tube (12) and a second access port (34) in said shaft boss (13) with the second access port (41) in the stern tube (12) located adjacent the second access port (34) in the shaft boss (13).

9. A tailshaft inspection assembly according to claim 7 or claim 8, wherein the first access port (33) in the shaft boss (13) and the first access port (40) in the stern tube (12) are coaxial.

10. A tailshaft inspection assembly according to any one of claims 7 to 9, and further comprising a first closure member (45) in the first access port (40) in the stern tube (12) and a first closure member (54) in the first access port (40) in the shaft boss (13).

11. A tailshaft inspection assembly according to claim 10 when appendant to claim 9, wherein the first closure member (45) for the first access port (40) in the stern tube (12) comprises a head portion (50), a tail (52) extending from the head portion (50), a bearing surface on the end of the tail (52) and a first tightening surface (53) on the tail, and the first closure member (54) for the first access port (33) in the shaft boss (13) comprises a second threaded head portion (60) operable to contact said bearing surface and a second tightening surface (63) on the second head portion (60).

0142939

FIGURE I

FIGURE 2

FIGURE 3A

FIGURE 3B

0142939

FIGURE 4A

FIGURE 4B

FIGURE 5

0142939

FIGURE 6A

FIGURE 6B

FIGURE 6C

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | AU-B- 427 533 (J. ARMSTRONG CLAY) --- | | B 63 B 9/00 B 63 H 23/32 |
| A | US-A-3 587 509 (J. ARMSTRONG CLAY) --- | | |
| A | FR-A-2 165 593 (SKF INDUSTRIAL TRADING AND DEVELOPMENT COMPANY) --- | | |
| A | US-A-4 298 312 (McKENZIE et al.) ----- | | |

TECHNICAL FIELDS SEARCHED (Int. Cl.4)

B 63 B
B 63 H
F 01 D

The present search report has been drawn up for all claims

| Place of search | Date of completion of the search | Examiner |
|---|---|---|
| THE HAGUE | 18-01-1985 | BRUMER |